# EUROPÄISCHE PATENTSCHRIFT

(11) **EP 1 413 858 B1**
(45) Veröffentlichungstag und Bekanntmachung des Hinweises auf die Patenterteilung: **23.08.2006**
(21) Anmeldenummer: 03023354.8
(22) Anmeldetag: 16.10.2003
(51) Int. Cl.: G01F 1/66

(54) **Ultraschallmassendurchflussmesser**
Ultrasound mass flow measurement device
Débitmètre à ultrasons

(43) Veröffentlichungstag der Anmeldung: 28.04.2004
(73) Patentinhaber: Endress + Hauser Flowtec AG, 4153 Reinach BL 1 (CH)
(72) Erfinder: Fröhlich, Thomas, Dr., 4142 Münchenstein (CH); Altendorf, Matthias, 79539 Lörrach (DE)
(74) Vertreter: Andres, Angelika Maria

(56) Entgegenhaltungen:
- EP-A- 0 264 991
- WO-A-99/51945
- DE-A- 19 648 784
- US-A- 4 596 133

## Beschreibung

Die Erfindung bezieht sich auf eine Vorrichtung zur Bestimmung und/oder Überwachung des Volumen- und/oder Massenstroms eines Mediums mit einem Meßrohr, das von dem Medium durchströmt wird, mit zumindest einem Ultraschallwandler, der die Ultraschall-Meßsignale aussendet und/oder empfängt, wobei sich die Meßsignale auf zumindest einem Schallpfad in dem Inneren des Meßrohrs ausbreiten, und mit einer Regel-/Auswerteeinheit, die anhand der Meßsignale bzw. anhand von Meßdaten, die aus den Ultraschall-Meßsignalen abgeleitet sind, den Volumen- und/oder den Massenstrom des in dem Meßrohr strömenden Mediums ermittelt.

Ultraschall-Durchflußmeßgeräte werden vielfach in der Prozeß- und Automatisierungstechnik eingesetzt. Sie erlauben es, den Volumen- und/oder Massenstrom eines Mediums in einer Rohrleitung berührungslos zu bestimmen.

Die bekannten Ultraschall-Durchflußmeßgeräte arbeiten entweder nach dem Doppler-Prinzip oder nach dem Laufzeitdifferenz-Prinzip. Beim Laufzeitdifferenz-Prinzip wird die unterschiedliche Laufzeit von Ultraschall-Meßsignalen in Strömungsrichtung und entgegen der Strömungsrichtung des Mediums ausgewertet. Hierzu werden die Ultraschall-Meßsignale von den Ultraschallwandlern wechselweise in Strömungsrichtung und entgegen der Strömungsrichtung des Mediums ausgesendet bzw. empfangen. Aus der Laufzeitdifferenz der Ultraschall-Meßsignale läßt sich die Fließgeschwindigkeit und damit bei bekanntem Durchmesser der Rohrleitung der Volumendurchfluß bzw. bei bekannter oder gemessener Dichte des Mediums der Massendurchfluß bestimmen.

Beim Doppler-Prinzip werden Ultraschall-Meßsignale mit einer vorgegebenen Frequenz in das strömende Medium eingekoppelt. Die in dem Medium reflektierten Ultraschall-Meßsignale werden ausgewertet. Anhand einer zwischen dem eingekoppelten und dem reflektierten Ultraschall-Meßsignal auftretenden Frequenzverschiebung läßt sich ebenfalls die Fließgeschwindigkeit des Mediums bzw. der Volumen und/oder Massenstrom bestimmen.

Der Einsatz von Durchflußmeßgeräten, die nach dem Doppler-Prinzip arbeiten, ist nur möglich, wenn in dem Medium Luftbläschen oder Verunreinigungen vorhanden sind, an denen die Ultraschall-Meßsignale reflektiert werden. Damit ist der Einsatz derartiger Ultraschall-Durchflußmeßgeräte im Vergleich zu den Ultraschall-Durchflußmeßgeräten, die nach dem Laufzeitdifferenz-Prinzip arbeiten, ziemlich eingeschränkt.

Hinsichtlich der Typen von Meßgeräten wird unterschieden zwischen Ultraschall-Durchflußmeßaufnehmern, die in die Rohrleitung eingesetzt werden, und Clamp-On Durchflußmeßgeräten, bei denen die Ultraschallwandler von außen an die Rohrleitung mittels eines Spannverschlusses angepreßt werden. Clamp-On Durchflußmeßgeräte sind beispielsweise in der EP 0 686 255 B1, der US-PS 4,484,478, der WO 99/51945 oder der US-PS 4,598,593 beschrieben.

Bei beiden Typen von Ultraschall-Durchflußmeßgeräten werden die Ultraschall-Meßsignale unter einem vorgegebenen Winkel in die Rohrleitung bzw. in das Meßrohr, in der/ in dem sich das strömende Medium befindet, eingestrahlt und/oder empfangen. Um eine optimale Impedanzanpassung zu erreichen, werden die Ultraschall-Meßsignale über einen Vorlaufkörper bzw. einen Koppelkeil in die Rohrleitung eingekoppelt bzw. aus der Rohrleitung ausgekoppelt. Hauptbestandteil eines Ultraschallwandlers ist zumindest ein piezoelektrisches Element, welches die Ultraschall-Meßsignale erzeugt und/oder empfängt.

Piezoelektrische Elemente an sich sind relativ kostengünstig. Um die piezoelektrischen Elemente an dem Meßrohr festzumachen, sind bei den bekannten Durchflußmeßaufnehmern Befestigungslösungen realisiert, die die Kosten für den eigentliche Ultraschallwandler um bis zu zwei Größenordnungen übersteigen. So sind im allgemein zwecks Befestigung des Ultraschallwandlers am Meßrohr aufgeschweißte Gehäuse mit Gewinden und Dichtungen vorgesehen. Das eigentlich kostengünstige, die Ultraschall-Meßsignale erzeugende und empfangende piezoelektrische Element wird im Stand der Technik folglich teuer 'verpackt'.

Ausgehend von dem Stand der Technik liegt der Erfindung die Aufgabe zugrunde, einen kostengünstigen Ultraschall-Durchlußmeßaufnehmer vorzuschlagen.

Gemäß einer ersten Variante weist der erfindungsgemäße Ultraschall-Durchlußmeßaufnehmer zumindest eine Funktionsfläche auf, die mit dem Medium in Kontakt steht - also mediumsberührend ausgebildet ist - und über die der Ultraschallwandler die Meßsignale aussendet und/oder empfängt, wobei die Funktionsfläche integraler Bestandteil des Meßrohres ist bzw. wobei die Funktionsfläche unlösbar mit dem Meßrohr verbunden ist. Die Variante mit nur einer Funktionsfläche und nur einem Ultraschallwandler wird bevorzugt in Meßaufnehmern zum Einsatz kommen, die nach dem Doppler-Prinzip arbeiten. Bei Meßaufnehmern, die nach dem Laufzeitdifferenz-Prinzip arbeiten, sind üblicherweise zumindest zwei Ultraschallwandler vorgesehen.

Gemäß einer zweiten Variante der erfindungsgemäßen Vorrichtung sind an dem Meßrohr zumindest zwei Funktionsflächen vorgesehen, die mit dem Medium (direkt oder indirekt) in Kontakt stehen und über die die Ultraschallwandler die Meßsignale aussenden und/oder empfangen, wobei die Kontaktflächen so geformt sind, daß die von den Ultraschallwandlern ausgesendeten und/oder empfangenen Meßsignale unter einem vorgegebenen Winkel in das von dem Medium durchströmte Meßrohr ausgesendet bzw. aus dem von dem Medium durchströmten Meßrohr empfangen werden. Der Vorteil der erfindungsgemäßen Vorrichtung ist neben der sehr kostengünstigen Herstellung auch darin zu sehen, daß das Medium nur noch mit dem einheitlichen Material des Meßrohres in Kontakt kommt. Darüber hinaus können die Funktionsflächen in beliebiger Ausgestaltung am Meßrohr angebracht sein. Daher kann der Schallweg der Ultraschall-Meßsignale auch über Reflexionen an der Rohrinnenwand wieder auf eine weitere Funktionsfläche treffen. Desweiteren muß der Schallweg der Ultraschall-Meßsignale nicht durch die Rohrmitte verlaufen, sondern er kann auch chordial geführt sein.

Gemäß einer bevorzugten Ausgestaltung ist das Meßrohr aus Metall gefertigt. Alternativ kann das Meßrohr aus Kunststoff gefertigt sein. Je nach gewählter Ausgestaltung wird das Meßrohr mit den integrierten Funktionsflächen mittels eines Gießverfahrens oder mittels eines Spritzgußverfahrens hergestellt.

Weiterhin ist es möglich, die Funktionsflächen mittels eines Tiefziehverfahrens oder einer Umformtechnik an das Meßrohr anzuformen. Wie bereits gesagt, sind die Funktionsflächen so in das Meßrohr integriert, daß die Ultraschall-Meßsignale einen gewünschten Schallweg durch das Meßrohr und folglich durch das sich in dem Meßrohr befindliche Medium nehmen.

Ist das Meßrohr aus Kunststoff gefertigt, so sieht eine vorteilhafte Weiterbildung der erfindungsgemäßen Vorrichtung vor, die Ultraschallwandler, die über die Funktionsflächen die Meßsignale aussenden bzw. empfangen, zumindest teilweise mit Kunststoff zu umspritzen. Hierdurch läßt sich auf einfache und damit kostengünstige Art und Weise eine Befestigung der Ultraschallwandler an den Funktionsflächen und zusätzlich eine Abkapslung der Ultraschallwandler erreichen.

Eine vorteilhafte Ausgestaltung der erfindungsgemäßen Vorrichtung schlägt zumindest ein Reflektorelement vor, das an der Innenwand des Meßrohres angebracht ist. Durch das Anbringen von Reflektorelementen in Kombination mit den entsprechend ausgestalteten Funktionsflächen läßt sich der Schallweg der Ultraschall-Meßsignale im Meßrohr in beliebige Richtungen lenken bzw. umlenken. Mittels der Reflektorelemente lassen sich neben diametralen Traversen in einfacher Weise auch chordiale Traversen realisieren.

Bevorzugt sind die Ultraschallwandler integrale Bestandteile des Meßrohres bzw. der Funktionsflächen. Alternativ ist gemäß einer Ausgestaltung vorgesehen, die Ultraschallwandler lösbar mit dem Meßrohr bzw. mit den Funktionsflächen zu verbinden. Die Verbindung kann z. B. über einen Feder- und/oder einen Klemmverschluß erfolgen. Durch diese Variante können beispielsweise defekte Ultraschallwandler in einfacher Art und Weise ausgetauscht werden. Eine vorteilhafte Weiterbildung des erfindungsgemäßen Durchflußmeßaufnehmers schlägt darüber hinaus vor, als Ultraschallwandler piezoelektrische Elemente (z. B. ansteuerbare Arrays) mit einer breiten Abstrahlcharakteristik zu verwenden. Hierdurch wird die Justierung der Ultraschallwandler am Meßrohr erleichtert.

Gemäß einer vorteilhaften Weiterbildung des erfindungsgemäßen Ultraschall-Durchflußmeßaufnehmers ist zumindest eine Anpaßschicht vorgesehen, die zwischen einem Ultraschallwandler und der zugehörigen Funktionsfläche angeordnet ist. Diese Anpaßschicht dient der Impedanzanpassung und gewährleistet, daß die Ultraschall-Meßsignale ohne große Energieverluste in das Meßrohr eingekoppelt werden.

Um den erfindungsgemäßen Ultraschall-Durchflußmeßaufnehmer auf einfache Art und Weise in eine Rohrleitung einfügen zu können, ist in jedem Endbereich des Meßrohres ein Prozeßanschluß vorgesehen. Bei den Prozeßanschlüssen handelt es sich bevorzugt um Flansche.

Um die empfindlichen Ultraschallwandler und/oder die elektrischen und elektronischen Teilelemente des erfindungsgemäßen Ultraschall-Durchflußmeßaufnehmers gegen äußere Einflüsse zu schützen, ist an der Außenwand des Meßrohres ein Gehäuse vorgesehen, das zumindest einen Teilbereich des Meßrohres abkapselt.

Bevorzugt sind die Funktionsflächen und/oder das zumindest eine Reflektorelement so angeordnet, daß die traversierenden Schallwege/der traversierende Schallweg der Meßsignale innerhalb des Meßrohres näherungsweise diametral und/oder chordial geführt sind/ist. Bei einer chordialen Führung der Schallwege läßt sich neben der Information über die mittlere Fließgeschwindigkeit des Mediums in dem Meßrohr auch Information über die Strömungsverteilung im Meßrohr gewinnen.

Die Erfindung wird anhand der nachfolgenden Zeichnungen näher erläutert. Es zeigt:
Fig. 1: eine erste Ausführungsform des erfindungsgemäßen Ultraschall-Durchflußmeßaufnehmers,
Fig. 2: eine zweite Ausführungsform des erfindungsgemäßen Ultraschall-Durchflußmeßaufnehmers und
Fig. 3: eine dritte Ausführungsform des erfindungsgemäßen Ultraschall-Durchflußmeßaufnehmers.

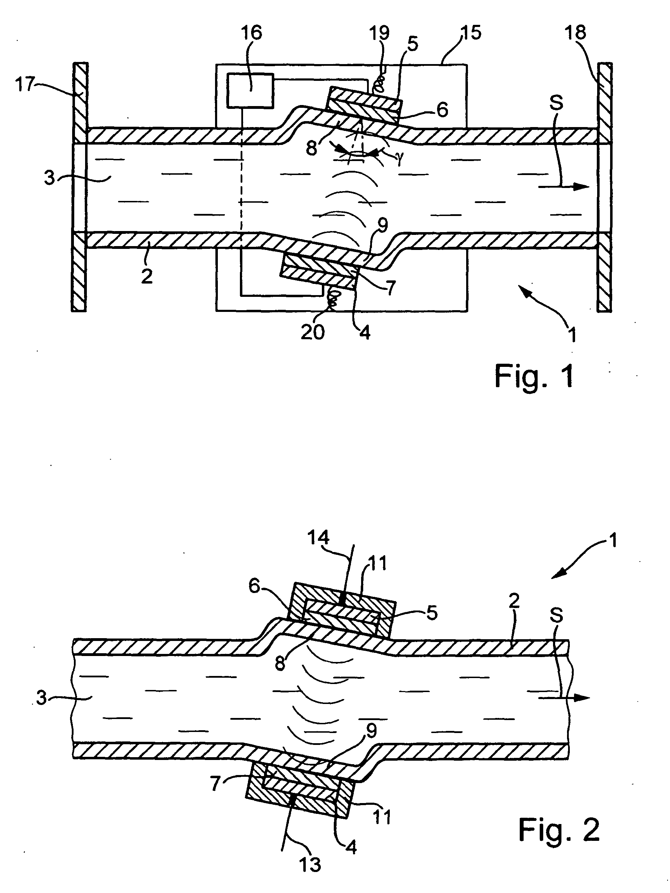

Fig. 1 zeigt eine erste Ausführungsform des erfindungsgemäßen Ultraschall-Durchflußmeßaufnehmers 1. Der Durchflußmeßaufnehmer 1 arbeitet entweder nach dem Doppler-Prinzip oder nach dem Laufzeitdifferenz-Prinzip. Die Befestigung des Durchflußmeßaufnehmers 1 in der nicht dargestellten Rohrleitung erfolgt im gezeigten Fall über die beiden Flansche 17, 18. Es versteht sich von selbst, daß der Durchflußmeßaufnehmer 1 auch in die Rohrleitung eingeschweißt werden kann.

Betrachten wir im folgenden den Fall, daß die Ultraschallwandler 4, 5 nach dem Laufzeitdifferenz-Prinzip arbeiten. Beide Ultraschallwandler 4, 5 sind zugleich als Sende- und Empfangselemente ausgebildet. Die Ultraschall-Meßsignale werden abwechselnd von den beiden Ultraschallwandlern 4, 5 erzeugt und über die jeweils zugeordnete Anpaßschicht 6, 7 über die Rohrwand des Meßrohres 2 in das strömende Medium 3 eingekoppelt bzw. aus dem strömenden Medium 3 ausgekoppelt. Die Anpaßschichten 6, 7 sind so ausgestaltet, daß die Ultraschall-Meßsignale beim Übergang zwischen Rohrwand und Medium 3 bzw. Medium 3 und Rohrwand nur geringe Energieverluste erleiden. Im gezeigten Fall sind die Ultraschallwandler 4, 5 lösbar mit dem Meßrohr 2 über federnde Halteelemente 19, 20, die sich an dem Gehäuse 15 abstützen, verbunden. Das Gehäuse 15 dient dem Schutz der empfindlichen Ultraschallwandler 4, 5 und der elektrischen und elektronischen Teile, insbesondere der Regel-/Auswerteeinheit 16.

Die Meßsignale werden unter einem Winkel γ in das strömende Medium 3 eingekoppelt bzw. aus dem strömenden Medium 3 ausgekoppelt. Um die Einund Auskopplung unter dem gewünschten Winkel γ zu erreichen, sind im gezeigten Fall zwei gegenüberliegende Teilbereiche des Meßrohres 3 in einer besonderen Art geformt bzw. verformt. Insbesondere sind die beiden Teilbereiche gleichsinnig um den gewünschten Winkel gegen die Längsachse des Meßrohres 2 geneigt - sie sind also weiterhin parallel zueinander ausgerichtet. Bei den beiden Teilbereichen des Meßrohrs 2 handelt es sich um die sog. Funktions-flächen 8, 9. Unter der Bezeichnung 'Funktionsflächen' 8, 9 werden in der Ultraschall-Meßtechnik die mediumsberührende Bereiche verstanden, über die die Ultraschall-Meßsignale in das Medium 3 hinein- bzw. aus dem Medium 3 herausgeführt werden. Erfindungsgemäß sind die Funktionsflächen 8, 9 unmittelbar in das Meßrohr 2 integriert. Erfindungsgemäß ist also eine Funktionsfläche 8; 9 nicht mehr Teilkomponente eines separaten Ultraschallwandlers, sondern sie ist Teil des Durchflußmeßaufnehmers 1 bzw. des Meßrohrs 2.

Die entsprechende Formung bzw. Verformung der Funktionsflächen 8, 9 erfolgt - wie bereits erwähnt - bevorzugt während des Herstellungsprozesses des Meßrohres 2. Das Meßrohr 2 ist entweder aus Metall oder Kunststoff gefertigt. Je nach gewählter Ausgestaltung wird das Meßrohr 2 mit den integrierten Funktionsflächen 8, 9 mittels eines Gießverfahrens oder mittels eines Spritzgußverfahrens hergestellt.

Weiterhin ist es möglich, die Funktionsflächen 8, 9 mittels eines Tiefziehverfahrens oder mittels einer Umformtechnik nachträglich an das Meßrohr 2 anzuformen. Wie bereits gesagt, sind die Funktionsflächen 8, 9 so in das Meßrohr 2 integriert, daß die Ultraschall-Meßsignale einen gewünschten Schallweg durch das Meßrohr 2 und folglich durch das sich in dem Meßrohr 2 befindliche Medium 3 nehmen. Es versteht sich von selbst, daß ein erfindungsgemäßer Durchflußmeßaufnehmer 1 im Vergleich mit den bekannt gewordenen Lösungen sehr kostengünstig herstellbar ist. Bislang war die 'Verpackung', sprich die Befestigung der Ultraschallwandler in entsprechend vorgesehenen Stutzen des Meßrohres mittels z.B. Gehäuse mit Gewinde und Dichtungen, sowohl von der Materialseite als auch von der Montageseite her aufwendig und teuer.

In Fig. 2 ist eine zweite Ausführungsform des erfindungsgemäßen Ultraschall-Durchflußmeßaufnehmers 1 zu sehen, die bevorzugt bei Meßrohren 2 zur Anwendung kommt, die über ein Spritzgußverfahren hergestellt werden. Diese Ausgestaltung unterscheidet sich von der in Fig. 1 gezeigten Ausgestaltung insbesondere im Hinblick auf die Befestigung der Ultraschallwandler 4, 5 an den Funktionsflächen 8, 9. Die Ultraschallwandler 4, 5 sind mit dem Material, aus dem das Meßrohr 2 hergestellt ist, umspritzt. Bei dieser Ausgestaltung entfällt folglich die nachträgliche Montage der Ultraschallwandler 4, 5 am Meßrohr 2; vielmehr werden die Ultraschallwandler 4, 5 bereits während des Herstellungsprozesses des Meßrohrs 2 an den Funktionsflächen 8, 9 festgemacht. Zudem wird bei dieser Ausgestaltung des Durchflußmeßaufnehmers 1 eine sehr gute Abkapslung der Ultraschallwandler 4, 5 erreicht.

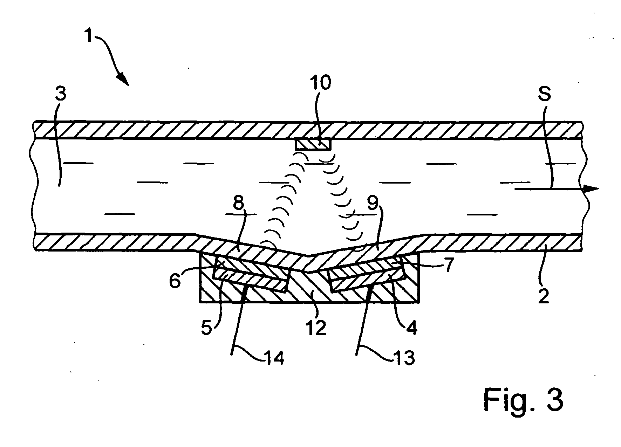

In Fig. 3 ist eine dritte Ausführungsform des erfindungsgemäßen Ultraschall-Durchflußmeßaufnehmers 1 dargestellt. Bei dieser Variante sind die beiden Funktionsflächen 8, 9, an denen die Ultraschallwandler 4, 5 befestigt sind, nicht gegenüberliegend sondern nebeneinander angeordnet. Die Neigung gegen die Längsachse des Meßrohrs 2 ist gegensinnig ausgeführt. Die Ultraschallwandler 4, 5 sind übrigens in dieser Ausgestaltung über eine Klebeverbindung an den Funktionsflächen 8, 9 bzw. an den Anpaßschichten 6, 7 befestigt. Auch hier erfolgt die Einkopplung bzw. die Auskopplung der Ultraschall-Meßsignale wieder über die Anpaßschichten 6, 7. Je nach Anwendungs-fall können diese Anpaßschichten 6, 7 jedoch auch entfallen und die Ultraschallwandler 4, 5 bzw. die piezoelektrischen Elemente sind direkt mit der Funktionsflächen 8, 9 bzw. mit dem Meßrohr 2 verbunden. Anpaßschichten 6, 7 werden immer dann in Verbindung mit der vorliegenden Erfindung zum Einsatz kommen, wenn es notwendig ist, die Übertragung der akustischen Energie von der Piezokeramik durch die Wandung des Meßrohrs 2 zu optimieren.

Die Reflexion der von den Ultraschallwandlern 4, 5 ausgesendeten Ultraschall-Meßsignale erfolgt bei der in Fig. 3 gezeigten Ausgestaltung an der gegenüberliegenden Innenwand des Meßrohrs 2. An dieser Reflexionsstelle ist im gezeigten Fall ein Reflexionselement 10 angebracht. Es versteht sich von selbst, daß dieses Reflexionselement 10 je nach Ausgestaltung des Meßrohrs 2 oder je nach Anwendungsfall auch entfallen kann.

Ganz allgemein läßt sich sagen, daß die Schallwege innerhalb des Meßrohres 2 in jeder gewünschten Richtung verlaufen können. Insbesondere sind die Funktionsflächen 8, 9 und/oder das zumindest eine Reflektorelement 10 so angeordnet, daß die das Meßrohr 2 traversierenden Schallwege bzw. der zumindest eine traversierende Schallweg, den die Ultraschall-Meßsignale innerhalb des Meßrohres 2 nehmen bzw. nimmt, näherungsweise diametral und/oder chordial geführt sind bzw. geführt ist. Über eine chordiale Führung läßt sich zusätzlich zu der Information über die mittlere Fließgeschwindigkeit des Mediums 3 auch Information hinsichtlich der Strömungsverteilung des Mediums 3 innerhalb des Meßrohres 2 gewinnen.

### Bezugszeichenliste

- 1: erfindungsgemäße Vorrichtung
- 2: Meßrohr
- 3: Medium
- 4: Ultraschallwandler
- 5: Ultraschallwandler
- 6: Anpaßschicht
- 7: Anpaßschicht
- 8: Funktionsfläche
- 9: Funktionsfläche
- 10: Reflektorelement
- 11: Ummantelung
- 12: Ummantelung
- 13: Verbindungsleitung
- 14: Verbindungsleitung
- 15: Gehäuse
- 16: Regel-/Auswerteeinheit
- 17: Flansch
- 18: Flansch
- 19: Halteelement
- 20: Halteelement

## Patentansprüche

1. Vorrichtung zur Bestimmung und/oder Überwachung des Volumen- und/oder Massenstroms eines Mediums (3) mit einem Meßrohr (2), das von dem Medium (3) durchströmt wird, wobei zumindest eine Funktionsfläche (8; 9) vorgesehen ist, die integraler Teil des Messrohrs ist und die mit dem Medium (3) in Kontakt steht, mit zumindest einem Ultraschallwandler (4, 5), der über die Funktionsfläche (8; 9) Meßsignale aussendet und/oder empfängt, wobei sich die Meßsignale auf zumindest einem Schallpfad in dem Inneren des Meßrohrs (2) ausbreiten, und mit einer Regel-/Auswerteeinheit (16), die anhand der Meßsignale bzw. anhand von Meßdaten, die aus den Meßsignalen abgeleitet sind, den Volumen- und/oder den Massenstrom des in dem Meßrohr (2) strömenden Mediums (3) ermittelt,
**dadurch gekennzeichnet,**
**daß** das Meßrohr (2) mit der zumindest einen integrierten Funktionsfläche (8; 9) aus Kunststoff mittels eines Spritzgußverfahrens gefertigt ist und
**daß** der Ultraschallwandler (4; 5), der über die Funktionsfläche (8; 9) die Meßsignale aussendet bzw. empfängt, zumindest teilweise mit einer Ummantelung (11; 12) aus Kunststoff umspritzt ist.

2. Vorrichtung nach Anspruch 1,
**dadurch gekennzeichnet,**
**daß** zumindest ein Reflektorelement (10) vorgesehen ist, das an der Innenwand des Meßrohres (2) angebracht ist.

3. Vorrichtung nach Anspruch 1 oder 2,
**dadurch gekennzeichnet,**
**daß** zumindest eine Anpaßschicht (6; 7) vorgesehen ist, die zwischen dem Ultraschallwandler (4; 5) und der entsprechenden Funktionsfiläche (8; 9) angeordnet ist.

4. Vorrichtung nach Anspruch 1,
**dadurch gekennzeichnet,**
**daß** in jedem der beiden Endbereiche des Meßrohrs ein Prozeßanschluß (17, 18) vorgesehen ist.

5. Vorrichtung nach Anspruch 1,
**dadurch gekennzeichnet,**
**daß** an der Außenwand des Meßrohres (2) ein Gehäuse (15) vorgesehen ist, das zumindest einen Teilbereich des Meßrohres (2) abkapselt.

6. Vorrichtung nach Anspruch 1,
**dadurch gekennzeichnet,**
**daß** die Funktionsflächen (8, 9) und/oder das zumindest eine Reflektorelement (10) so angeordnet sind, daß die traversierenden Schallwege/der traversierende Schallweg der Meßsignale innerhalb des Meßrohres (2) näherungsweise diametral und/oder chordial geführt sind/ist.

7. Vorrichtung nach Anspruch 1,
**dadurch gekennzeichnet,**
**dass** es sich bei dem Ultraschallwandler (4; 5) um ein piezoelektrisches Element mit einer breiten Abstrahlcharakteristik handelt.

## Claims

1. A device for determining and/or monitoring the volume flow and/or mass flow of a medium (3), with a measuring tube (2) through which the medium (3) flows, wherein at least one functional surface (8; 9) is provided which is an integral part of the measuring tube and is in contact with the medium (3), with at least one ultrasonic transducer (4; 5) which sends and/or receives measuring signals via the functional surface (8; 9), wherein the measuring signals propagate over at least one sound path inside the measuring tube (2), and with a control/evaluation unit (16) which determines the volume flow and/or the mass flow of the medium (3) flowing in the measuring tube (2) with the aid of the measuring signals or with the aid of measurement data derived from the measuring signals, **characterised in that** the measuring tube (2) with the at least one integrated functional surface (8; 9) is manufactured from plastics by means of an injection-moulding process, and **in that** a sheathing (11; 12) of plastics is injection-moulded around at least part of the ultrasonic transducer (4; 5), which sends and/or receives measuring signals via the functional surface (8; 9).

2. A device according to claim 1, **characterised in that** at least one reflector element (10) is provided which is mounted on the inner wall of the measuring tube (2).

3. A device according to claim 1 or 2, **characterised in that** at least one matching layer (6; 7) is provided which is arranged between the ultrasonic transducer (4; 5) and the corresponding functional surface (8; 9).

4. A device according to claim 1, **characterised in that** a process connection (17, 18) is provided in each of the two end regions of the measuring tube.

5. A device according to claim 1, **characterised in that** a housing (15) is provided on the outer wall of the measuring tube (2) and encapsulates at least part of the measuring tube (2).

6. A device according to claim 1, **characterised in that** the functional surfaces (8; 9) and/or the at least one reflector element (10) are arranged so that the traversing sound paths / the traversing sound path of the measuring signals inside the measuring tube (2) are/is guided approximately diametrally and/or chordally.

7. A device according to claim 1, **characterised in that** the ultrasonic transducer (4; 5) is a piezoelectric element with a broad radiation characteristic.

## Revendications

1. Dispositif destiné à la mesure et/ou la surveillance du débit volumique et/ou massique d'un fluide (3) à l'aide d'un tube de mesurage (2), qui est parcouru par le fluide (3), dispositif au sein duquel est prévue au moins une surface fonctionnelle (8, 9) faisant partie intégrante du tube de mesurage et est en contact avec le fluide (3), dispositif muni au moins d'un transducteur ultrasonique (4, 5), qui émet et/ou reçoit des signaux de mesure à travers la surface fonctionnelle (8, 9), les signaux de mesure rayonnant au moins sur une trajectoire ultrasonore à l'intérieur du tube de mesurage (2), et d'une unité de régulation / d'exploitation (16), qui détermine le débit volumique et/ou le débit massique du fluide (3) circulant dans le tube de mesurage (2) à l'appui des signaux de mesure ou à l'appui des données de mesure, qui sont dérivé(e)s des signaux de mesure ultrasoniques,
**caractérisé en ce**
**que** le tube de mesurage (2) doté au moins d'une surface fonctionnelle (8, 9) intégrée est fabriqué en plastique par procédé de moulage par injection et
**que** le transducteur ultrasonique (4, 5), qui émet et reçoit les signaux de mesure par l'intermédiaire de la surface fonctionnelle (8, 9), est enrobé au moins partiellement d'un enrobage (11, 12) en plastique.

2. Dispositif selon la revendication 1,
**caractérisé en ce**
**qu'**est prévu au moins un élément réflecteur (10), qui est installé sur la paroi intérieure du tube de mesurage (2).

3. Dispositif selon la revendication 1 ou 2,
**caractérisé en ce**
**qu'**est prévue au moins une couche d'adaptation (6, 7), qui est disposée entre le transducteur ultrasonique (4, 5) et la surface fonctionnelle (8, 9) correspondante.

4. Dispositif selon la revendication 1,
**caractérisé en ce**
**qu'**est prévu un raccord processus (17, 18) dans chacune des zones d'extrémité du tube de mesurage.

5. Dispositif selon la revendication 1,
**caractérisé en ce**
**qu'**est prévu sur la paroi extérieure du tube de mesurage (2) un boîtier (15), qui protège au moins une zone partielle du tube de mesurage (2).

6. Dispositif selon la revendication 1,
**caractérisé en ce**
**que** les surfaces fonctionnelles (8, 9) et/ou qu'au moins un élément réflecteur (10) sont disposés de telle manière que la(s) trajectoire(s) sonore(s) traversante(s) des signaux de mesure soit/soient guidée(s) quasiment de façon diamétrale ou cordale.

7. Dispositif selon la revendication 1,
**caractérisé en ce**
**que** concernant le transducteur ultrasonique (4, 5), il s'agit d'un élément piézo-électrique doté d'une large caractéristique de rayonnement.
